# EUROPÄISCHE PATENTSCHRIFT

(11) **EP 2 905 582 B1**
(45) Veröffentlichungstag und Bekanntmachung des Hinweises auf die Patenterteilung: **05.10.2016**
(21) Anmeldenummer: 14154668.9
(22) Anmeldetag: 11.02.2014
(51) Int. Cl.: G01D 5/244, G01D 5/347

(54) **Vormontierte Winkelmesseinrichtung**
Pre-assembled angle measuring device
Dispositif de mesure d'angle prémonté

(43) Veröffentlichungstag der Anmeldung: 12.08.2015
(73) Patentinhaber: Dr. Johannes Heidenhain GmbH, 83301 Traunreut (DE)
(72) Erfinder: Sulik, Reinhard, 07747 Jena (DE)

(56) Entgegenhaltungen:
- EP-A1- 1 526 363
- DE-A1-102010 009 497
- JP-A- S6 217 615

## Beschreibung

Die Erfindung betrifft eine vormontierte Winkelmesseinrichtung gemäß dem Anspruch 1.

Winkelmesseinrichtungen werden häufig zur Positionsmessung in Verbindung mit elektrischen Antriebseinheiten benutzt. Zum platzsparenden Einbau werden häufig lagerlose Winkelmesseinrichtungen verwendet, die auch als Einbaudrehgeber bezeichnet werden. Derartige Einbaudrehgeber bestehen aus einem Rotor mit einem Teilungsträger und einem Stator mit einer Abtasteinheit zur Abtastung des Teilungsträgers. Zur drehbaren Lagerung des Rotors gegenüber dem Stator wird im Messbetrieb die Lagerung der Antriebseinheit genutzt, so dass sich eine eigene Lagerung der Winkelmesseinrichtung erübrigt. Beim Anbau der Winkelmesseinrichtung an die Antriebseinheit muss sichergestellt sein, dass der Rotor zum Stator eine axiale sowie radiale Lagezuordnung aufweist, in der optimale Abtastsignale erzielt werden. Deshalb erfolgt bereits beim Hersteller derartiger Winkelmesseinrichtungen eine optimale Justierung des axialen Abstandes sowie der radialen Zuordnung zwischen dem Teilungsträger und der Abtasteinheit. Nach erfolgter Justierung werden Rotor und Stator mittels Montagemittel zueinander arretiert, so dass die einjustierte Lagezuordnung während des Transports zum Anwender sowie auch während des Anbaus an die Antriebseinheit beibehalten wird. Nach erfolgtem Anbau wird dann die Arretierung für den nachfolgenden Messbetrieb gelöst.

Mit den Montagemitteln ist es auch möglich Rotor und Stator dieser Winkelmesseinrichtung nach erfolgtem Anbau wieder in dieser einjustierten Lage miteinander zu fixieren und die so vormontierte Winkelmesseinrichtung ggf. an einem anderen zu messenden Objekt, beispielsweise einer anderen Antriebseinheit, wieder anzubauen.

### STAND DER TECHNIK

Aus der EP 1 526 363 A1 ist eine vormontierte Winkelmesseinrichtung mit den Merkmalen des Oberbegriffs des Anspruchs 1 sowie ein Bausatz mit den Merkmalen des Anspruchs 7 bekannt. Zur Lagefixierung des Rotors gegenüber dem Stator außerhalb des Messbetriebs -also zum Transport und zum Anbau an eine Antriebseinheit- ist ein Montagemittel in Form einer Platte vorgesehen, die einerseits mit dem Rotor und andererseits mit dem Stator verschraubt ist.

Die Verschraubung der Platte mit dem Rotor bedingt relativ viel Platz. Darüber hinaus ist eine einfache Justierung der optimalen Lagezuordnung nicht in allen geforderten Freiheitsgraden möglich.

DE102010009497 und JPS6217615 sind andere Beispiele von vormontierten Winkelmesseinrichtungen.

### ZUSAMMENFASSUNG DER ERFINDUNG

Der Erfindung liegt die Aufgabe zugrunde eine vormontierte Winkelmesseinrichtung anzugeben, die einen kompakten Aufbau ermöglicht und mit der eine präzise Positionsmessung ermöglicht wird.

Diese Aufgabe wird durch eine vormontierte Winkelmesseinrichtung mit den Merkmalen des Anspruchs 1 gelöst.

Vorteilhafte Ausgestaltungen der Erfindung ergeben sich aus den abhängigen Ansprüchen sowie der nachfolgenden Beschreibung von Ausführungsbeispielen.

### KURZE BESCHREIBUNG DER ZEICHNUNGEN

Es zeigt
- Figur 1: eine erste vormontierte Winkelmesseinrichtung im Schnitt;
- Figur 2: einen Halter der ersten vormontierten Winkelmesseinrichtung;
- Figur 3: eine zweite vormontierte Winkelmesseinrichtung im Schnitt;
- Figur 4: einen Halter der zweiten vormontierten Winkelmesseinrichtung;
- Figur 5: eine dritte Winkelmesseinrichtung bei der Vormontage, und
- Figur 6: die vormontierte Winkelmesseinrichtung gemäß Figur 5 beim Anbau an eine Antriebseinheit.

### BESCHREIBUNG DER AUSFÜHRUNGSFORMEN

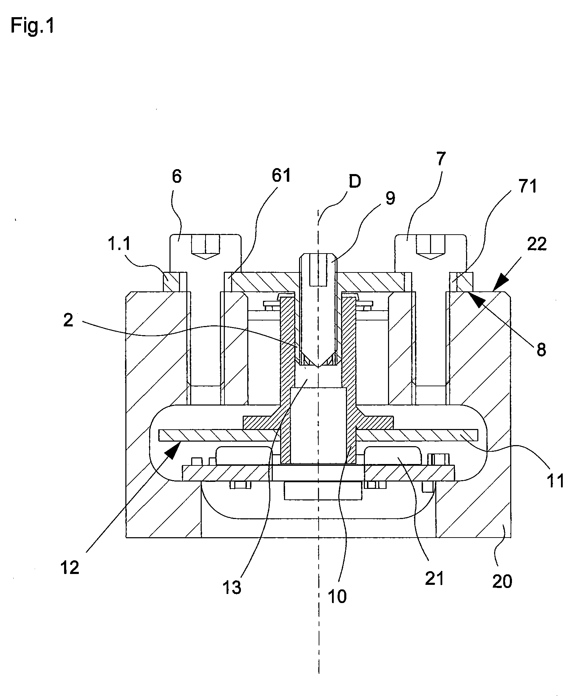

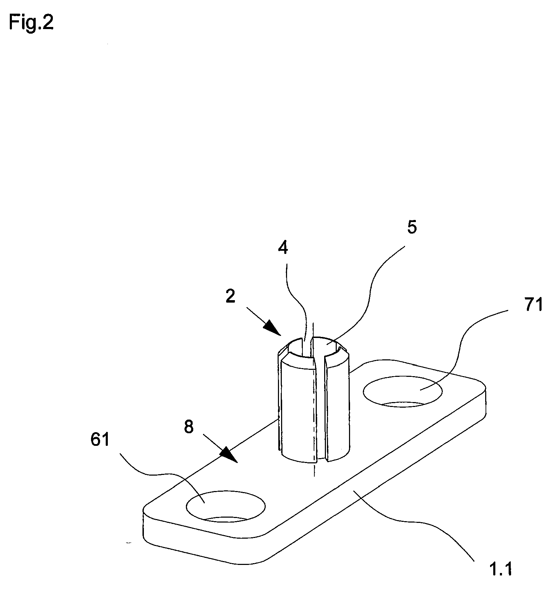

Anhand der Figuren 1 und 2 wird ein erstes Ausführungsbeispiel einer erfindungsgemäß ausgestalteten lagerlosen vormontierten Winkelmesseinrichtung sowie der zur Schaffung dieser vormontierten Winkelmesseinrichtung ausgebildete Bausatz erläutert.

Die Winkelmesseinrichtung umfasst einerseits einen Rotor 10 mit einem Teilungsträger 11 und andererseits einen Stator 20 mit einer Abtasteinheit 21. Im Messbetrieb sind Rotor 10 und Stator 20 um eine Drehachse D relativ zueinander drehbar angeordnet. Dabei wird der Teilungsträger 11 zur Bestimmung der relativen Winkellage des Rotors 10 gegenüber dem Stator 20 von der Abtasteinheit 21 abgetastet. Der Teilungsträger 11 ist im Ausführungsbeispiel als Scheibe ausgebildet, die eine Teilung 12 trägt. Die Teilung 12 ist als inkrementale oder codierte Teilung ausgebildet und ist der Abtasteinheit 21 gegenüberliegend angeordnet, so dass die Abtasteinheit 21 im Messbetrieb positionsabhängige Abtastsignale erzeugt.

Beim Anbau dieser lagerlosen Winkelmesseinrichtung an eine Antriebseinheit muss sichergestellt sein, dass der Rotor 10 zum Stator 20 eine axiale sowie radiale Lagezuordnung aufweist, in der optimale Abtastsignale erzielt werden. Hierzu sind Montagemittel zur Lagefixierung des Rotors 10 gegenüber dem Stator 20 vorgesehen. Diese Montagemittel bestehen aus einem Halter 1.1, an dem eine hohlzylindrische Hülse 2 angeordnet ist, die zur Vormontage in eine längs der Drehachse D verlaufenden koaxialen Bohrung 13 des Rotors 10 eingesetzt ist. Die Bohrung 13 und die Hülse 2 sind umfangsmäßig derart dimensioniert, dass die die Hülse 2 für Bohrung 13 und somit für den Rotor 10 eine spielfreie Längsführung in axialer Richtung, also längs der Drehachse D bildet. Durch diese Längsführung wird eine axiale Justierung des Rotors 10 gegenüber dem Stator 20 ermöglicht, so dass ein optimaler Abtastabstand zwischen der Teilung 12 und der Abtasteinheit 21 einstellbar ist. Zur axialen Justierung des Rotors 10 ist die Hülse 2 in axialer Richtung relativ zum Stator 20 festgelegt. Diese Festlegung ist durch einen in axialer Richtung wirkenden Formschluss realisiert, indem der Halter 1.1 mit seiner unteren Anschlagfläche 8 auf einer korrespondierenden Anschlagfläche 22 des Stators 20 aufliegt.

Die Hülse 2 ist dazu ausgebildet, um nach der Einstellung des optimalen Abtastabstandes den Rotor 10 in dieser Lagezuordnung am Halter 1.1 axial zu fixieren. Diese Fixierung wird durch ein Spreizelement 9 realisiert, mit dem die Hülse 2 radial aufspreizbar ist, wobei durch das Aufspreizen die Hülse 2 an einer Innenwand der Bohrung 13 radial klemmt. Durch die Anordnung der Bohrung 13 und des Spreizelementes 9 zentrisch und rotationssymmetrisch zur Drehachse D ist gewährleistet, dass die Klemmkraft symmetrisch zur Drehachse D wirkt. Die eingeleiteten Kräfte kompensieren sich derart, dass keine resultierende Kraft entsteht, die eine radiale Verschiebung des Rotors 10 relativ zum Stator 20 verursacht.

Das Spreizelement 9 ist beispielsweise in die Hülse 2 längs der Drehachse D einschraubbar. Die Hülse 2 weist dafür ein Innengewinde und das Spreizelement 9 ein korrespondierendes Außengewinde auf.

Um ein leichtes Aufspreizen der Hülse 2 zu ermöglichen ist diese zumindest partiell radial aufweitbar ausgebildet, indem sie beispielsweise zumindest partiell dünnwandig ausgebildet ist. Besonders vorteilhaft ist, wenn die Hülse 2 zumindest partiell längs der Drehachse D verlaufende Schlitze 4 aufweist, wodurch mehrere mittels des Spreizelementes 9 radial verlagerbare federnde Zungen 5 bzw. Klemmbacken entstehen, wie insbesondere in Figur 2 dargestellt ist. Die radial auslenkbaren Zungen 5 gewährleisten, dass durch sie ausschließlich radial wirkende Klemmkräfte ausgeübt werden, und dass keine Querkräfte eingeleitet werden.

Das Spreizelement 9 ist beispielsweise ein an seinem Ende kegelig zulaufender Stift.

Die Anschlagfläche 8 des Halters 1.1 hat die Funktion, diesen während der Justierung -also während der Vormontage- einerseits in axialer Richtung am Stator 20 zu fixieren und andererseits eine radiale Justierung des Halters 1.1 gegenüber dem Stator 20 zuzulassen. Die radiale Justierung des Halters 1.1 wird durch Auflage des Halters 1.1 am Stator 20 und durch Verschieben des Halters 1.1 mit seiner Anschlagfläche 8 an einer korrespondierenden axial wirkenden Anschlagfläche 22 des Stators 20 realisiert.

Nach erfolgter Justierung wird der Halter 1.1 am Stator 20 ortsfest fixiert. Hierzu sind mehrere Schrauben 6, 7 vorgesehen, die in den Stator 20 von oben her einschraubbar sind, so dass der Halter 1.1 mit seiner Anschlagfläche 8 am Stator 20 geklemmt wird. Zur Aufnahme der Schrauben 6, 7 sind im Halter 1.1 Bohrungen 61, 71 vorgesehen, die auch bei in den Stator 20 eingeschraubter Schraube 6, 7, aber noch nicht fest angezogener Schraube 6, 7, ein Verschieben des Halters 1.1 mit seiner Anschlagfläche 8 an der Anschlagfläche 22 des Stators 20 zulässt. Um dieses Verschieben und somit die radiale Justierung des Halters 1.1 zusammen mit dem Rotor 10 zu ermöglichen, sind die Bohrungen 61, 71 entsprechend dimensioniert, insbesondere größer als der Schaft der jeweiligen Schraube 6, 7.

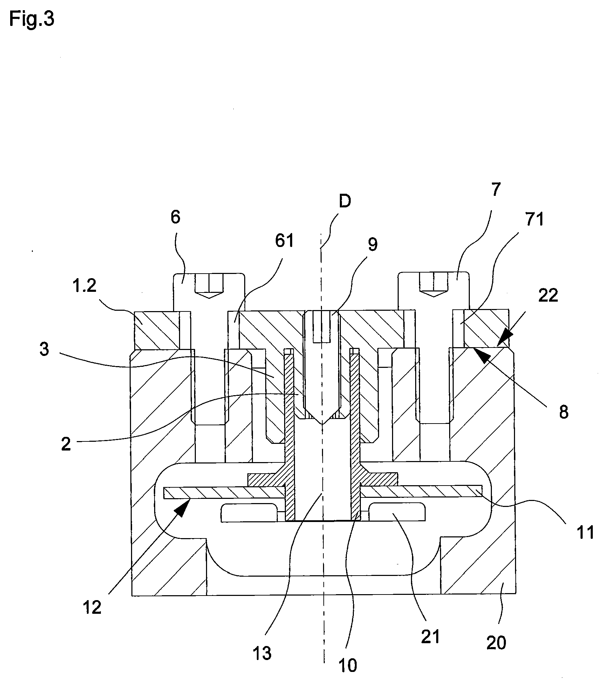

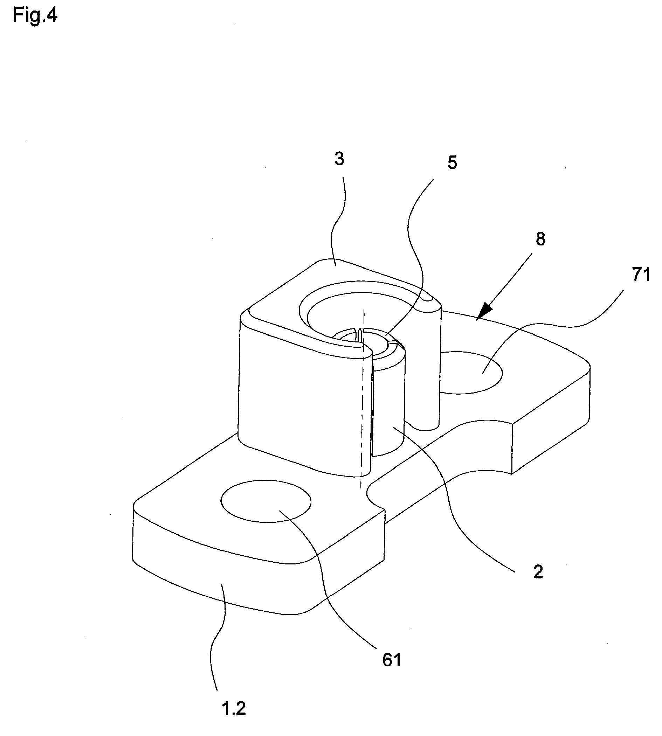

Die Figuren 3 und 4 zeigen ein zweites Ausführungsbeispiel der Erfindung. Der Aufbau dieser Winkelmesseinrichtung entspricht weitgehend dem ersten Ausführungsbeispiel, so dass die dort erläuterten Ausführungen auch hier gelten und nachfolgend nur die Unterscheidungsmerkmale beschrieben werden. Ergänzend zum ersten Ausführungsbeispiel ist zur Lagefixierung des Rotors 10 gegenüber dem Stator 20 eine Außenführung 3 vorgesehen, die dazu ausgebildet ist den Rotor 10 radial formschlüssig zu positionieren. Die Außenführung 3 fungiert auch als Gegenhalter, welcher einer radialen Deformation des Rotors 10 durch das Spreizelement 9 entgegenwirkt. Die Hülse 2 und die Außenführung 3 sind im Beispiel gemeinsam am Halter 1.2 angeordnet, wie insbesondere aus der Figur 4 ersichtlich ist.

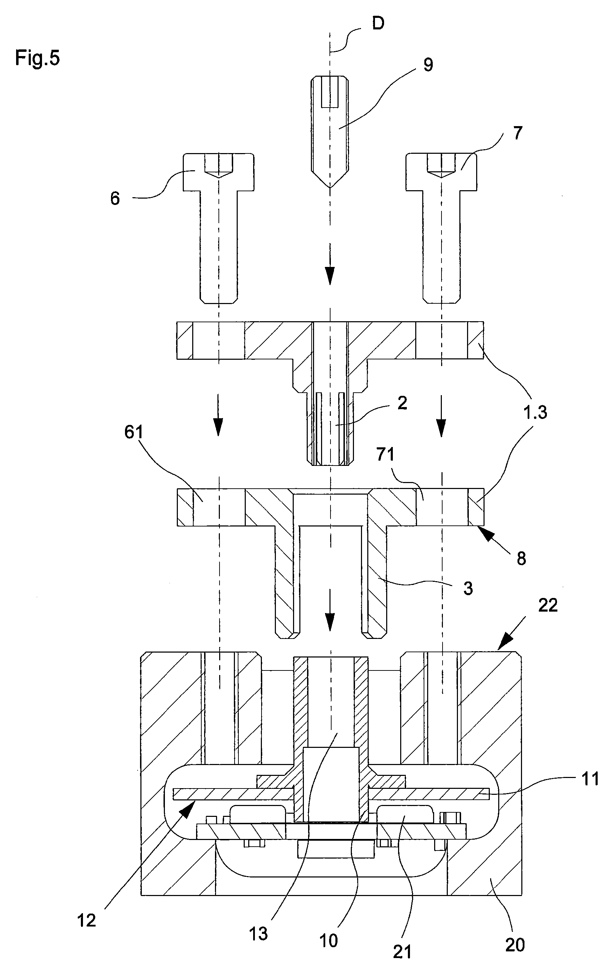

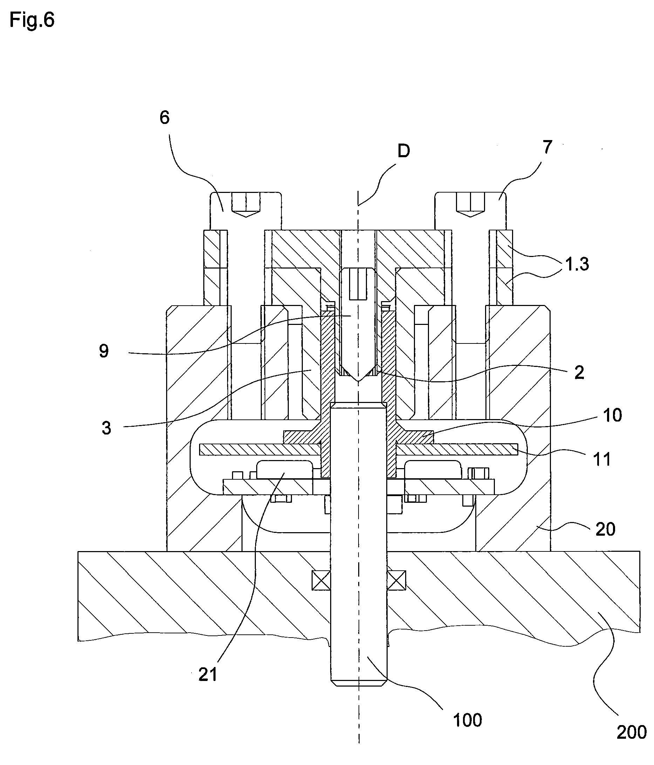

Die Figuren 5 und 6 zeigen eine weitere dritte alternative Ausführungsform einer erfindungsgemäß ausgestalteten Winkelmesseinrichtung. Der Aufbau dieser Winkelmesseinrichtung entspricht weitgehend dem zweiten Ausführungsbeispiel, so dass die dort erläuterten Ausführungen auch hier gelten und nachfolgend nur die Unterscheidungsmerkmale beschrieben werden. Im Unterschied zum zweiten Ausführungsbeispiel ist der Halter 1.3 zweiteilig ausgeführt. Die Hülse 2 ist an einem ersten Teil des Halters 1.3 angeordnet und die Außenführung 3 an einem zweiten Teil des Halters 1.3 angeordnet. Durch diese zweiteilige Ausbildung ist die Fertigung der Hülse 2 und der Außenführung 3 einfacher.

Das erste Teil des Halters 1.3 und das zweite Teil des Halters 1.3 sind gemeinsam handhabbar und bei der Justierung in radialer und axialer Lage durch Formschluss fest zueinander positioniert. Die radiale Zuordnung des ersten Teils des Halters 1.3 zum zweiten Teil des Halters 1.3 ist durch Formschluss vorgegeben, der im Beispiel als Bund am ersten Teil (oberen Teil) des Halters 1.3 ausgebildet ist, der in eine Passung des zweiten Teils (unterer Teil) des Halters 1.3 spielfrei eingreift. In Figur 5 ist dargestellt, wie die Montagemittel, hier bestehend aus dem Halter 1.3, dem Spreizelement 9 und den Schrauben 6, 7 mit dem Rotor 10 und dem Stator 20 zur Schaffung der Vormontage zusammengeführt werden.

Figur 6 zeigt die vormontierte Winkelmesseinrichtung angebaut an eine Antriebseinheit. Dabei wird der Rotor 10 und der Stator 20 der Winkelmesseinrichtung im justierten Zustand der Antriebseinheit zugeführt und der Rotor 10 mit einer Welle 100 der Antriebseinheit und der Stator 20 mit dem Stator 200 der Antriebseinheit verbunden. Nach erfolgtem Anbau werden die Montagemittel (Halter 1.3, Spreizelement 9 und Schrauben 6,7) gelöst, insbesonder auch entfernt, so dass im Messbetrieb eine Rotation des Rotors 10 der Winkelmesseinrichtung gegenüber dem Stator 20 der Winkelmesseinrichtung ermöglicht ist.

Der Teilungsträger 11 kann scheibenförmig oder auch als Trommel ausgebildet sein, wobei die Teilung bei einer Trommel dann auf dem Außenumfang oder dem Innenumfang der Trommel angeordnet sein kann.

Die Teilung 12 kann optisch, induktiv, magnetisch oder kapazitiv abtastbar ausgebildet sein.

## Patentansprüche

1. Vormontierte Winkelmesseinrichtung umfassend
- einen Rotor (10) mit einem Teilungsträger (11);
- einen Stator (20) mit einer Abtasteinheit (21), wobei in einem Messbetrieb Rotor (10) und Stator (20) um eine Drehachse (D) relativ zueinander drehbar angeordnet sind und der Teilungsträger (11) zur Bestimmung der relativen Winkellage des Rotors (10) gegenüber dem Stator (20) von der Abtasteinheit (21) abtastbar ist;
- Montagemittel, die den Rotor (10) gegenüber dem Stator (20) außerhalb des Messbetriebs lagefixieren,
**dadurch gekennzeichnet, dass**
die Montagemittel eine Hülse (2) und ein Spreizelement (9) aufweisen, wobei die Hülse (2) in eine längs zur Drehachse (D) verlaufende Bohrung (13) des Rotors (20) eingesetzt ist und mittels des Spreizelementes (9) radial aufgespreizt ist, wobei durch das Aufspreizen die Hülse (2) an einer Innenwand der Bohrung (13) radial geklemmt ist, und dass weiterhin die Hülse (2) an einem Halter (1.1, 1.2, 1.3) angeordnet ist, der am Stator (20) befestigt ist.

2. Vormontierte Winkelmesseinrichtung nach Anspruch 1, **dadurch gekennzeichnet, dass** das Spreizelement (9) in die Hülse (2) längs der Drehachse (D) eingeschraubt ist.

3. Vormontierte Winkelmesseinrichtung nach einem der vorhergehenden Ansprüche, **dadurch gekennzeichnet, dass** die Hülse (2) längs der Drehachse (D) verlaufende Schlitze (4) aufweist, und dadurch Zungen (5) gebildet sind, die mittels des Spreizelementes (9) radial an die Innenwand der Bohrung (13) gedrängt sind.

4. Vormontierte Winkelmesseinrichtung nach einem der vorhergehenden Ansprüche, **dadurch gekennzeichnet, dass** der Halter (1.1, 1.2, 1.3) eine Anschlagfläche (8) aufweist, welche den Halter (1.1, 1.2, 1.3) in axialer Richtung am Stator (20) lagefixiert.

5. Vormontierte Winkelmesseinrichtung nach Anspruch 4, **dadurch gekennzeichnet, dass** der Halter (1.1, 1.2, 1.3) am Stator (20) mittels zumindest einer Schraube (6, 7) befestigt ist, die in den Stator (20) eingeschraubt ist und den Halter (1.1, 1.2, 1.3) mit seiner Anschlagfläche (8) am Stator (20) klemmt.

6. Vormontierte Winkelmesseinrichtung nach einem der vorhergehenden Ansprüche, **dadurch gekennzeichnet, dass** die Montagemittel weiterhin eine Außenführung (3) aufweisen, welche den Rotor (10) formschlüssig am Halter (1.2, 1.3) radial positioniert.

## Claims

1. Pre-assembled angle measuring device comprising
- a rotor (10) having a graduation carrier (11);
- a stator (20) having a sensing unit (21), wherein rotor (10) and stator (20) being arranged such that they can be rotated relative to each other about an axis of rotation (D) in a measuring operation, and the graduation carrier (11) can be sensed by the sensing unit (20) in order to determine the relative angular position of the rotor (10) with respect to the stator (20);
- assembly means, which fix the position of the rotor (10) with respect to the stator (20) outside the measuring operation,
**characterized in that**
the assembly means have a sleeve (2) and an expansion element (9), wherein the sleeve (2) is inserted into a bore (13) in the rotor (10) extending longitudinally with respect to the axis of rotation (D) and is expanded radially by means of the expansion element (9), wherein the sleeve (2) is clamped radially against an inner wall of the bore (13) by the expansion, and **in that**, furthermore, the sleeve (2) is arranged on a holder (1.1, 1.2, 1.3) which is fixed to the stator (20).

2. Pre-assembled angle measuring device according to Claim 1, **characterized in that** the expansion element (9) is screwed into the sleeve (2) along the axis of rotation (D).

3. Pre-assembled angle measuring device according to one of the preceding claims, **characterized in that** the sleeve (2) has slots (4) extending along the axis of rotation (D) and, as a result, tongues (5) are formed, which are forced radially against the inner wall of the bore (13) by means of the expansion element (9).

4. Pre-assembled angle measuring device according to one of the preceding claims, **characterized in that** the holder (1.1, 1.2, 1.3) has a contact surface (8), which fixes the position of the holder (1.1, 1.2, 1.3) on the stator (20) in the axial direction.

5. Pre-assembled angle measuring device according to Claim 4, **characterized in that** the holder (1.1, 1.2, 1.3) is fixed to the stator (20) by means of at least one screw (6, 7), which is screwed into the stator (20) and clamps the holder (1.1, 1.2, 1.3) with its contact surface (8) on the stator (20).

6. Pre-assembled angle measuring device according to one of the preceding claims, **characterized in that** the assembly means also have an outside guide (3), which positions the rotor (10) radially on the holder (1.2, 1.3) in a form-fitting manner.

## Revendications

1. Dispositif de mesure d'angle pré-monté, comprenant
- un rotor (10) avec un porteur de graduations (11);
- un stator (20) avec une unité de balayage (21), dans lequel, lors d'un fonctionnement de mesure, le rotor (10) et le stator (20) sont disposés de façon rotative l'un par rapport à l'autre autour d'un axe de rotation (D) et le porteur de graduations (11) peut être balayé par l'unité de balayage (21) pour la détermination de la position angulaire relative du rotor (10) par rapport au stator (20),
- des moyens de montage, qui fixent la position du rotor (10) par rapport au stator (20) en dehors du fonctionnement de mesure,
**caractérisé en ce que** les moyens de montage présentent une douille (2) et un élément expansible (9), dans lequel la douille (2) est introduite dans un alésage (13) du rotor (10) qui s'étend le long de l'axe de rotation (D) et est expansée radialement au moyen de l'élément expansible (9), dans lequel la douille est serrée radialement par l'expansion contre une paroi intérieure de l'alésage (13), et **en ce que** la douille (2) est en outre disposée sur un support (1.1, 1.2, 1.3), qui est fixé au stator (20).

2. Dispositif de mesure d'angle pré-monté selon la revendication 1, **caractérisé en ce que** l'élément expansible (9) est vissé dans la douille (2) le long de l'axe de rotation (D).

3. Dispositif de mesure d'angle pré-monté selon l'une quelconque des revendications précédentes, **caractérisé en ce que** la douille (2) présente des fentes (4) s'étendant le long de l'axe de rotation (D) et **en ce que** des lamelles (5) sont ainsi formées, qui sont repoussées radialement contre la paroi intérieure de l'alésage (13) au moyen de l'élément expansible (9).

4. Dispositif de mesure d'angle pré-monté selon l'une quelconque des revendications précédentes, **caractérisé en ce que** le support (1.1, 1.2, 1.3) présente une face de butée (8), qui fixe la position du support (1.1, 1.2, 1.3) en direction axiale sur le stator (20).

5. Dispositif de mesure d'angle pré-monté selon la revendication 4, **caractérisé en ce que** le support (1.1, 1.2, 1.3) est fixé sur le stator (20) au moyen d'au moins une vis (6, 7), qui est vissée dans le stator (20) et qui serre le support (1.1, 1.2, 1.3) avec sa face de butée (8) sur le stator (20).

6. Dispositif de mesure d'angle pré-monté selon l'une quelconque des revendications précédentes, **caractérisé en ce que** les moyens de montage présentent en outre un guide extérieur (3), qui positionne le rotor (10) radialement par emboîtement sur le support (1.2, 1.3).
